# FASCICULE DE BREVET EUROPEEN

(11) **EP 2 658 714 B1**
(45) Date de publication et mention de la délivrance du brevet: **17.06.2015**
(21) Numéro de dépôt: 11815552.2
(22) Date de dépôt: 29.12.2011
(51) Int. Cl.: B32B 17/10, B41M 3/00, B41M 5/00, B41M 1/12, B41M 1/30, B41M 1/34

(54) **PROCEDE DE FABRICATION D'UN VITRAGE FEUILLETE IMPRIME PAR SERIGRAPHIE A L'AIDE D'UN ECRAN DE SERIGRAPHIE DOUBLE TISSAGE**
VERFAHREN ZUR HERSTELLUNG EINER SIEBDRUCK-VERBUNDGLASSCHEIBE MITTELS DOPPELGEWEBE-SIEBDRUCK
METHOD FOR MANUFACTURING A SILKSCREEN PRINTED LAMINATED GLASS PANEL USING A DOUBLE-WEAVE SILKSCREEN

(30) Priorité: 29.12.2010 FR 1061350
(43) Date de publication de la demande: 06.11.2013
(73) Titulaire: Saint-Gobain Glass France, 92400 Courbevoie (FR)
(72) Inventeur: BURELOUX, Dominique, F-02300 Ognes (FR); DUMENIL, Thierry, F-60280 Margny Les Compiegne (FR); WERY, Sébastien, F-60200 Compiegne (FR)
(74) Mandataire: Ribeaudeau, Marion Christine
(86) Numéro de dépôt international: PCT/FR2011/053209
(87) Numéro de publication internationale: WO 2012/089988

(56) Documents cités:
- WO-A2-2009/122075

## Description

L'invention concerne le domaine des vitrages feuilletés, et plus particulièrement l'impression par sérigraphie d'un vitrage feuilleté.

Les vitrages feuilletés sont fréquemment utilisés comme pare-brise de véhicule. Ils comportent de nombreuses fonctionnalités : couche réfléchissant le rayonnement solaire, permettant d'abaisser la température du tableau de bord et la température ambiante dans l'habitacle, support de rétroviseur intérieur, bus-bars d'amenée de courant électrique notamment pour une couche ITO ou un réseau de fils chauffants, bande supérieure filtrant le rayonnement solaire, à coloration éventuellement dégradée, détecteur de pluie...

Les vitrages feuilletés sont imprimés à diverses fins : bord du vitrage opacifié sur toute sa périphérie pour protéger la colle sous-jacente et cacher des éléments de carrosserie ou joints de la vue d'un observateur à l'extérieur du véhicule, inscriptions relatives au fabricant, à diverses normes, surface opacifiée pour cacher l'embase du rétroviseur intérieur de la vue d'un observateur à l'extérieur du véhicule.

Il est habituel de réaliser de telles impressions sur feuilles de verre plat, c'est-à-dire le cas échéant avant des opérations de bombage (la difficulté d'imprimer sur des surfaces bombées est en effet bien supérieure). Un procédé préféré est la sérigraphie. Ce procédé consiste à placer, au-dessus de la feuille à imprimer, un écran de sérigraphie comprenant une partie en tissu perméable à l'encre, dont la forme définit le motif d'impression, et une partie rendue imperméable à l'encre. On dépose la composition d'impression sur l'écran et, en la pressant avec une raclette contre l'écran, on l'amène à se déposer sur la feuille à imprimer. La sérigraphie est apte à procurer les qualités optiques requises : bonnes couvrance, opacité et résolution, est aisément industrialisable.

Cependant, la sérigraphie sur feuilles de verre plat n'est pas sans inconvénient. Notamment, les feuilles de verre lors de leur bombage, deux par deux, entrent en contact physique les unes avec les autres, ou avec des éléments mécaniques des installations de bombage. Ce contact physique nécessite l'emploi préalable d'un four supplémentaire pour la recuisson de la composition d'impression, afin d'éviter que les surfaces imprimées insuffisamment durcies et séchées ne soient affectées.

Pour résoudre ce problème, la publication WO 2009/122075 propose d'imprimer non pas les feuilles de verre du vitrage feuilleté, mais la feuille adhésive intercalaire de polyvinylbutyral. A cet effet, WO 2009/122075 décrit une composition permettant l'impression par sérigraphie en une seule passe d'un motif sur une feuille de polyvinylbutyral avec des temps de « sec au toucher » améliorés.

On connaît également la publication NL9200702 qui décrit un écran de sérigraphie formé de deux tamis de finesse différente.

Les procédés d'impression par sérigraphie de l'état de la technique conduisent à des résultats d'impression inacceptables lorsqu'il sont mis en oeuvre sur des feuilles présentant des rugosités de surface importantes (par exemple présentant une rugosité de surface, définie comme la valeur d'écart moyen arithmétique du profil Ra de plusieurs dizaines de µm).

En effet, la rugosité emprisonne une quantité plus élevée de la composition d'impression, ce qui augmente la taille du motif. Les sillons formés par la rugosité guident la composition d'impression à la surface de la feuille avant séchage, ce qui entraîne une déformation du motif. De plus, la composition d'impression se répartit inégalement à la surface de la feuille, ce qui se traduit par des niveaux de gris trop importants.

Les procédés de l'état de la technique ne permettent donc pas d'obtenir, lorsque l'impression est réalisée sur une feuille présentant une forte rugosité de surface:
- une bonne définition du motif imprimé, à contours nets, sans bavure et sans déformation ;
- une opacité acceptable;
- une faible quantité de niveaux de gris ;
- une bonne couvrance, se traduisant par l'absence totale de transparence sous forme de « trous d'épingles » (pinholes).

Il a été découvert de façon surprenante qu'il était possible d'obtenir ces propriétés en utilisant un écran de sérigraphie qui comprend deux tissus superposés, le tissu (I) destiné à être placé en regard de la face à sérigraphier ayant une ouverture de mailles inférieure à l'autre tissu (S), la différence d'ouverture de mailles entre les deux tissus se situant dans la plage de 22 à 65 µm.

La présente invention propose donc un procédé de fabrication d'un vitrage feuilleté imprimé composé de deux feuilles de verre séparées, par une feuille adhésive intercalaire, selon la revendication 1 les étapes consistant à :
(a) sérigraphier par une composition d'impression au moins une face de l'une des feuilles composant le vitrage, à l'aide d'un écran de sérigraphie ; et
(b) assembler les différentes feuilles composant le vitrage dont au moins une a été sérigraphiée ;
caractérisé par le fait que l'on utilise un écran de sérigraphie qui comprend deux tissus superposés, le tissu (I) destiné à être placé en regard de la face à sérigraphier ayant une ouverture de mailles inférieure à l'autre tissu (S), la différence d'ouverture de mailles entre les deux tissus se situant dans la plage de 28 à 43 µm.

La superposition de deux couches de tissus sur un même écran contrôle le comportement de l'encre lors du transfert vers la feuille à sérigraphier et permet d'éviter la déformation du motif imprimé. Le procédé permet également de déposer une plus grande quantité de composition d'impression en surface de la feuille à sérigraphier et améliore donc l'opacité et la densité optique du motif imprimé. En outre, le procédé réduit les niveaux de gris, c'est-à-dire permet l'impression d'un motif uniformément noir ou coloré.

Il a été découvert de façon surprenante qu'une différence d'ouverture de mailles supérieure à 65 µm ne permettait pas d'obtenir des caractéristiques d'impression acceptables en ce qui concerne la densité optique, l'imprimabilité et la résolution du motif imprimé. De plus, une différence d'ouverture de maille inférieure à 22 µm ne permet pas d'obtenir une résolution et une imprimabilité acceptable du motif.

Les 2 couches de tissu de l'écran sont superposées, chacune étant fixée au cadre de l'écran. Elles peuvent être assemblées l'une à l'autre, par exemple par des moyens de serrage ou de collage sur l'un ou plusieurs de leurs bords.

Un motif peut être défini sur l'écran par les procédés utilisés couramment en sérigraphie, tel que le clichage, c'est-à-dire enduction et durcissement d'une émulsion sur l'écran. Le motif peut être défini sur l'un ou l'autre des tissus ou sur les deux tissus.

La différence d'ouverture de mailles entre les deux tissus se situe dans la plage de 28 à 43 µm.

Le tissu (I) a une ouverture de mailles entre 60 et 90 µm.

Le tissu (S) a une ouverture de mailles entre 90 et 130 µm.

Avantageusement, les fils du tissu (I) ont un diamètre inférieur aux fils du tissu (S). La différence de diamètre est de préférence entre 5 et 30 µm.

Les fils du tissu (I) peuvent avoir un diamètre de 30 µm à 60 µm, notamment de 40 µm à 48 µm.

Les fils du tissu (S) peuvent avoir un diamètre de 50 µm à 80 µm, notamment de 55 µm à 70 µm.

La trame du tissu (I) est de préférence sensiblement non parallèle à la trame du tissu (S). Avantageusement, La trame du tissu (I) forme un angle de 53 à 83 degrés, notamment de 60 à 75 degrés avec la trame du tissu (S).

Le tissu (I) et le tissu (S) peuvent être en polyamide. On peut également utiliser tout matériau habituellement utilisé en sérigraphie.

On sérigraphie au moins l'une des faces de la feuille adhésive intercalaire, qui est une feuille de matière plastique, notamment de polyvinylbutyral.

Dans le cas d'une impression sur la feuille adhésive intercalaire, notamment de polyvinylbutyral, la composition d'impression peut être une des compositions d'encre de la publication WO2009/122075, en particulier une composition comprenant une résine polyvinylbutyral de masse moléculaire évaluée par chromatographie par perméation de gel centrée sur une valeur au plus égale à 50000 en équivalent polystyrène, de préférence au plus égale à 40000, de façon plus préférée au plus égale à 30000.

Avantageusement, la résine polyvinylbutyral a une masse moléculaire au moins égale à 10000, de préférence à 15000.

Il est préféré que le taux d' [OH] de la résine polyvinylbutyral corresponde à un pourcentage massique de poly(alcool vinylique) de 22, de préférence 20 et en particulier 18%, et minimal de 9, de préférence 11 et en particulier 13%.

De préférence, la température de transition vitreuse T_{G} de la résine polyvinylbutyral est au plus égale à 70°C.

Une composition d'encre préférée est une composition comprenant 2 à 35% en masse de résine polyvinylbutyral et 1 à 50% en masse d'au moins un pigment et/ou une autre particule et/ou un colorant et/ou un luminophore.

Les pigments, particules, colorants, luminophores peuvent être choisis parmi ceux décrits dans la publication WO2009/122075.

Selon d'autres caractéristiques préférées de la composition, elle comporte 30 à 75% en masse de solvant. Elle peut également comporter 0,2 à 3 % en masse d'un agent de thixotropie consistant en une silice ou plusieurs en mélange.

Le solvant solubilisant la résine polyvinylbutyral peut également être choisi parmi ceux décrits dans la publication WO2009/122075.

La au moins une face de feuille adhésive intercalaire que l'on sérigraphie peut présenter une rugosité de surface, définie comme la valeur d'écart moyen arithmétique du profil Ra, de plus de 20 µm, notamment de plus de 30 µm.

Le procédé selon l'invention est également avantageux pour l'impression par sérigraphie sur des feuilles moins rugueuses ou non rugueuses. Il permet alors l'amélioration de la densité optique du vitrage feuilleté imprimé.

Dans un mode de réalisation, on sérigraphie au moins l'une des faces d'une des feuilles de verre, et la composition d'impression est un émail.

Le procédé permet alors d'augmenter l'épaisseur de la couche d'émail déposé sur le verre, et donc l'opacité du motif imprimé, tout en conservant une résolution similaire à celle obtenue avec un écran de sérigraphie à simple tissage.

L'invention porte également sur un vitrage feuilleté imprimé obtenu par le procédé tel que défini ci-dessus.

Avantageusement, le vitrage feuilleté imprimé présente une densité optique supérieure à 3, de préférence à 4, sur sa partie imprimée.

De préférence, le vitrage feuilleté imprimé présente des niveaux de gris inférieurs à 5 sur sa partie imprimée.

Pour mieux illustrer l'objet de la présente invention, sans toutefois en limiter la portée, on va en décrire ci-après plusieurs exemples.

### Exemple 1 : Fabrication d'un vitrage feuilleté selon l'invention

Dans cet exemple, on a imprimé un motif par sérigraphie sur une feuille de polyvinylbutyral rugueux de type Solutia RF41 avant de l'assembler entre deux feuilles de verre pour fabriquer un vitrage feuilleté.

Les motifs consistaient en des lignes de cercles de diamètre 2,23 mm et 2,26 mm.

L'impression s'est faite selon le procédé de l'invention, à l'aide d'un écran de sérigraphie double tissage. L'écran S comprenait 55 fils/cm, les fils ayant un diamètre de 64 µm. L'écran I comprenait 77 fils/cm, les fils ayant un diamètre de 48 µm.

A titre comparatif, on a également préparé un vitrage feuilleté imprimé à l'aide du procédé de la technique antérieure, utilisant un écran simple tissage.

Les vitrages feuilletés préparés selon les deux procédés ont été analysés pour leur densité optique, leurs niveaux de gris et la définition du motif imprimé.

On a mesuré la densité optique avec un densitomètre X-Rite 341. La valeur moyenne de densité optique a été calculée à partir de 10 points de mesure.

On a évalué la définition du motif imprimé en mesurant le diamètre maximal des motifs circulaires imprimés.

Le Tableau 1 ci-dessous présente les résultats des analyses.

**Tableau 1 : Comparaison des caractéristiques d'impression obtenues avec un écran simple tissage et un écran double tissage selon l'invention.**

| | Ecran simple tissage (comp) | Ecran double tissage (inv) |
|---|---|---|
| Valeur moyenne de densité optique | 4, 09 | 4,51 |
| Valeurs moyennes de niveaux de gris | 4, 69 | 4,18 |
| Diamètre du motif imprimé (motif de 2,26 mm de diamètre) | 2,395 mm | 2,312 mm |
| Diamètre du motif imprimé (motif de 2,23 mm de diamètre) | 2,382 mm | 2,320 mm |

Le procédé selon l'invention apporte donc une nette amélioration en terme de densité optique. Il permet donc de renforcer l'opacité du vitrage et sa fonction de protection.

De plus, il réduit les niveaux de gris et produit donc un motif d'impression plus uniforme.

Il permet également d'obtenir une déformation plus faible du motif imprimé, améliorant donc la définition de l'impression.

### Exemple 2 : Comparaison entre plusieurs écrans double tissage

On a procédé comme à l'Exemple 1, en testant différentes configurations d'écran double tissage, chacune présentant une valeur particulière de différence d'ouvertures de maille.

L'écran 11 est un écran double tissage selon l'invention. Les autres écrans 12 à 15 sont des écrans double tissage qui présentent une différence d'ouvertures de maille en dehors de la plage de l'invention.

Pour chaque configuration d'écran, on a évalué 3 propriétés : l'imprimabilité du motif, la densité optique du vitrage feuilleté fini et la résolution. Seul l'écran 11, selon l'invention, permet une impression satisfaisante du motif selon ces trois critères.

Les autres configurations d'écran 12 à 15 ne sont pas satisfaisantes en terme de résolution et d'imprimabilité. De plus, les écrans 14 et 15 donnent des résultats non-acceptables en terme de densité optique.

**Tableau 2 : comparaison entre plusieurs écrans double tissage**

| Ecran | Tissu S | | | Tissu I | | | |
|---|---|---|---|---|---|---|---|
| | Nb fils/ cm | Diamètre des fils (µm) | Ouverture de mailles (µm) | Nb fils/cm | Diamètre des fils (µm) | Ouvertu re de mailles (µm) | Différence d'ouverture de mailles (µm) |
| 11 (inv) | 55 | 64 | 117,8 | 77 | 48 | 81, 9 | 35,9 |
| 12 (comp) | 68 | 55 | 92,1 | 90 | 40 | 71,1 | 20,9 |
| 13 (comp) | 51 | 70 | 126,1 | 77 | 48 | 81,9 | 44,2 |
| 14 (comp) | 43 | 80 | 152,6 | 77 | 48 | 81,9 | 70,7 |
| 15 (comp) | 43 | 80 | 152,6 | 90 | 40 | 71,1 | 81,4 |

## Revendications

1. Procédé de fabrication d'un vitrage feuilleté imprimé composé de deux feuilles de verre séparées par une feuille adhésive intercalaire, comprenant les étapes consistant à :
(a) sérigraphier par une composition d'impression au moins l'une des faces de la feuille adhésive intercalaire, qui est une feuille de matière plastique, notamment de polyvinylbutyral, à l'aide d'un écran de sérigraphie ; et
(b) assembler les différentes feuilles composant le vitrage dont au moins une a été sérigraphiée ;
**caractérisé par le fait que** l'on utilise un écran de sérigraphie qui comprend deux tissus superposés, le tissu (I) destiné à être placé en regard de la face à sérigraphier ayant une ouverture de mailles inférieure à l'autre tissu (S), la différence d'ouverture de mailles entre les deux tissus se situant dans la plage de 28 à 43 µm, le tissu (I) ayant une ouverture de mailles entre 60 et 90 µm et le tissu (S) ayant une ouverture de mailles entre 90 et 130 µm.

2. Procédé selon la revendication 1, **caractérisé par le fait que** les fils du tissu (I) ont un diamètre inférieur aux fils du tissu (S).

3. Procédé selon l'une des revendications 1 à 2, **caractérisé par le fait que** les fils du tissu (I) ont un diamètre de 30 µm à 60 µm, notamment de 40 µm à 48 µm.

4. Procédé selon l'une des revendications 1 à 3, **caractérisé par le fait que** les fils du tissu (S) ont un diamètre de 50 µm à 80 µm, notamment de 55 µm à 70 µm.

5. Procédé selon l'une des revendications 1 à 4, **caractérisé par le fait que** la trame du tissu (I) forme un angle de 53 à 83 degrés, notamment de 60 à 75 degrés avec la trame du tissu (S).

6. Procédé selon l'une des revendications 1 à 5, **caractérisé par le fait que** le tissu (I) et le tissu (S) sont en polyamide.

7. Procédé selon l'une des revendications 1 à 6, **caractérisé par le fait que** la composition d'impression comprend une résine polyvinylbutyral de masse moléculaire mesurée par chromatographie par perméation de gel centrée sur une valeur au plus égale à 50000 en équivalent polystyrène.

8. Procédé selon l'une des revendications 1 à 7, **caractérisé par** le fait la au moins une face de la feuille adhésive intercalaire que l'on sérigraphie présente une rugosité de surface, définie comme la valeur d'écart moyen arithmétique du profil Ra, de plus de 20 µm, notamment de plus de 30 µm.

## Patentansprüche

1. Verfahren zur Herstellung einer Siebdruck-Verbundglasscheibe, gebildet aus zwei durch eine zwischenliegende Klebscheibe getrennte Glasscheiben, umfassend die folgenden Schritte:
(a) Bedrucken von mindestens einer der Flächen der zwischenliegenden Klebscheibe, die eine Kunststoffscheibe ist, insbesondere aus Polyvinylbutyral, durch eine Druckzusammensetzung mithilfe einer Siebdruckschablone; und
(b) Zusammensetzen der verschiedenen Scheiben, die die Verbundglasscheibe ergeben, von denen mindestens eine im Siebdruckverfahren bedruckt wurde;
**dadurch gekennzeichnet, dass** man eine Siebdruckschablone verwendet, die zwei übereinanderliegende Gewebe umfasst, wobei das Gewebe (I), das dazu bestimmt ist, gegenüber der im Siebdruckverfahren zu bedruckenden Fläche platziert zu werden, eine kleinere Maschenweite als das andere Gewebe (S) aufweist, wobei der Unterschied in der Maschenweite zwischen den zwei Geweben sich im Bereich von 28 bis 43 µm befindet, wobei das Gewebe (I) eine Maschenweite zwischen 60 und 90 µm und das Gewebe (S) eine Maschenweite zwischen 90 und 130 µm aufweist.

2. Verfahren nach Anspruch 1, **dadurch gekennzeichnet, dass** die Fäden des Gewebes (I) einen kleineren Durchmesser als die Fäden des Gewebes (S) aufweisen.

3. Verfahren nach einem der Ansprüche 1 bis 2, **dadurch gekennzeichnet, dass** die Fäden des Gewebes (I) einen Durchmesser von 30 µm bis 60 µm, insbesondere von 40 µm bis 48 µm aufweisen.

4. Verfahren nach einem der Ansprüche 1 bis 3, **dadurch gekennzeichnet, dass** die Fäden des Gewebes (S) einen Durchmesser von 50 µm bis 80 µm, insbesondere von 55 µm bis 70 µm aufweisen.

5. Verfahren nach einem der Ansprüche 1 bis 4, **dadurch gekennzeichnet, dass** der Schuss des Gewebes (I) mit dem Schuss des Gewebes (S) einen Winkel von 53 bis 83 Grad, insbesondere von 60 bis 75 Grad bildet.

6. Verfahren nach einem der Ansprüche 1 bis 5, **dadurch gekennzeichnet, dass** das Gewebe (I) und das Gewebe (S) aus Polyamid sind.

7. Verfahren nach einem der Ansprüche 1 bis 6, **dadurch gekennzeichnet, dass** die Druckzusammensetzung ein Polyvinylbutyralharz mit einer durch Gel-Permeations-Chromatographie gemessenen Molekülmasse umfasst, die einen mittleren Wert von höchstens gleich 50000 Polystyrol-Äquivalent aufweist.

8. Verfahren nach einem der Ansprüche 1 bis 7, **dadurch gekennzeichnet, dass** mindestens eine Fläche der zwischenliegenden Klebscheibe, die man im Siebdruckverfahren bedruckt, eine Oberflächenrauigkeit, die als arithmetischer Mittenrauhwert definiert ist, von mehr als 20 µm, insbesondere mehr als 30 µm aufweist.

## Claims

1. Process for manufacturing a printed laminated glazing unit composed of two glass sheets separated by an interlayer adhesive sheet, comprising the steps consisting in:
(a) screen printing, with a printing composition, at least one of the faces of the interlayer adhesive sheet, which is a sheet of plastic, in particular of polyvinyl butyral, using a screen printing screen; and
(b) assembling the various sheets making up the glazing unit, at least one of which has been screen printed;
**characterized in that** a screen printing screen is used that comprises two superimposed fabrics, the fabric (I) intended to be placed opposite the face to be screen printed having a smaller mesh opening than the other fabric (S), the difference in mesh opening between the two fabrics lying in the range from 28 to 43 µm, the fabric (I) having a mesh opening between 60 and 90 µm and the fabric (S) having a mesh opening between 90 and 130 µm.

2. Process according to Claim 1, **characterized in that** the yarns of the fabric (I) have a smaller diameter than the yarns of the fabric (S).

3. Process according to either of Claims 1 and 2, **characterized in that** the yarns of the fabric (I) have a diameter of from 30 µm to 60 µm, in particular from 40 µm to 48 µm.

4. Process according to one of Claims 1 to 3, **characterized in that** the yarns of the fabric (S) have a diameter of from 50 µm to 80 µm, in particular from 55 µm to 70 µm.

5. Process according to one of Claims 1 to 4, **characterized in that** the weft of the fabric (I) forms an angle of 53 to 83 degrees, in particular of 60 to 75 degrees with the weft of the fabric (S).

6. Process according to one of Claims 1 to 5, **characterized in that** the fabric (I) and the fabric (S) are made of polyamide.

7. Process according to one of Claims 1 to 6, **characterized in that** the printing composition comprises a polyvinyl butyral resin having a molecular weight, measured by gel permeation chromatography, centered about a value at most equal to 50 000 in polystyrene equivalents.

8. Process according to one of Claims 1 to 7, **characterized in that** the at least one face of the interlayer adhesive sheet that is screen printed has a surface roughness, defined as the value of the arithmetic mean deviation of the profile Ra, of more than 20 µm, in particular of more than 30 µm.
